(19) Europäisches Patentamt
European Patent Office
Office européen des brevets

(11) **EP 2 822 166 B1**

(12) **EUROPÄISCHE PATENTSCHRIFT**

(45) Veröffentlichungstag und Bekanntmachung des Hinweises auf die Patenterteilung:
**06.04.2016 Patentblatt 2016/14**

(51) Int Cl.:
*H02M 3/335* *(2006.01)*

(21) Anmeldenummer: **13174465.8**

(22) Anmeldetag: **01.07.2013**

(54) **Eintakt-Durchflusswandler mit sekundärseitiger Snubberschaltung**

Forward converter with snubber circuit at the secondary side

Convertisseur direct avec circuit d'amortissement du côté secondaire

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.01.2015 Patentblatt 2015/02**

(73) Patentinhaber: **Siemens Aktiengesellschaft**
**80333 München (DE)**

(72) Erfinder:
• **Dyszewski, Janusz**
**1200 Wien (AT)**

• **Emberger, Andreas**
**1030 Wien (AT)**

(74) Vertreter: **Maier, Daniel Oliver et al**
**Siemens AG**
**Postfach 22 16 34**
**80506 München (DE)**

(56) Entgegenhaltungen:
**EP-A1- 1 202 440     US-A- 5 278 748**
**US-A1- 2005 243 579**

**Beschreibung**

Die Erfindung betrifft einen Eintakt-Durchflusswandler mit einem Transformator, an dem eine Primärwicklung und eine Sekundärwicklung angeordnet sind, wobei die Primärwicklung mittels zweier symmetrisch in Serie angeordneter Leistungsschaltelemente getaktet an eine Eingangsspannung geschaltet ist, wobei die Sekundärwicklung über sekundärseitige Flusswandlerelemente mit einem Ausgang des Eintakt-Durchflusswandlers verbunden ist und wobei während einer Sperrphase eine Magnetisierungsenergie frei in parasitäre Kapazitäten umschwingt.

Bei derartigen Eintakt-Durchflusswandlern wird ein hohes Tastverhältnis von bis zu 70% angestrebt. Das ermöglicht ein hohes Übersetzungsverhältnis des Transformators, wobei die auftretenden Effektivströmen und die Rückschlagspannungen gering sind gegenüber sonstigen Wandlern. Allerdings ist dann während einer Sperrphase keine herkömmliche Entmagnetisierung mittels einer eigenen Entlastungswicklung einsetzbar. Stattdessen werden der Magnetisierungsstrom des Wandlers und die daraus resultierende Rückschlagspannung von parasitären Kapazitäten des Transformators und der Leistungsschaltelemente abgefangen.

Sekundärseitig umfasst der Aufbau eines solchen Eintakt-Durchflusswandler eine Speicherdrossel und zwei sekundärseitige Diode, wahlweise in der Plus- oder Minusleitung angeordnet. Zumeist dient ein RCD-Netzwerk (Snubber) zum Schutz der sekundärseitigen Dioden. Eine aus einem Kondensator, zwei Dioden und einer Drossel bestehende Snubber-Schaltung ist aus der EP 1 202 440 A1 bekannt. Eine solche Snubber-Schaltung wird auch bei Resonanzwandlern eingesetzt, wie in der US 5 278 748 A offenbart.

Weil nach dem Abschalten der Leistungsschaltelemente die Magnetisierungsenergie frei in die parasitären Kapazitäten umschwingt, müssen die Bauteile solche Eintakt-Durchflusswandler so ausgelegt sein, dass sie den Spannungsbelastungen während eines Entmagnetisierungsvorgangs standhalten.

Nachteilig ist dabei die Umwandlung der Magnetisierungsenergie in Wärme, was einen schlechten - Wirkungsgrad des Wandlers zur Folge hat.

Der Erfindung liegt die Aufgabe zugrunde, für einen Eintakt-Durchflusswandler der eingangs genannten Art eine Verbesserung gegenüber dem Stand der Technik anzugeben.

Erfindungsgemäß wird diese Aufgabe gelöst durch die Merkmale der unabhängigen Ansprüche 1 und 8. Verbesserungen sind in abhängigen Ansprüchen dargelegt.

Dabei ist sekundärseitig ein Resonanzkondensator angeordnet, dessen erster Anschluss mit einem Ende der Sekundärwicklung und dessen zweiter Anschluss über eine erste Diode mit dem anderen Ende der Sekundärwicklung verbunden ist, wobei der zweite Anschluss des Resonanzkondensators über eine Zusatzschaltung, bestehend aus weiteren sekundärseitigen Flusswandlerelementen, mit dem Ausgang des Eintakt-Durchflusswandlers verbunden ist, um die im Resonanzkondensator gespeicherte Energie an den Ausgang abzugeben. Auf diese Weise geht die in den Resonanzkondensator überschwingende Entmagnetisierungsenergie nicht verloren, sondern wird über die Zusatzschaltung dem Ausgang des Eintakt-Durchflusswandlers zugeführt. Das erhöht den Wirkungsgrad und vereinfacht die mechanische Konstruktion des Wandlers, weil keine Vorkehrungen für eine thermische Ableitung der Magnetisierungsenergie notwendig sind. Es entfällt somit eine thermische Verbindung eines Entlastungsnetzwerkes (Snubber) mit einem Kühlkörper. Zudem sinkt die Funktionsbeeinflussung durch parasitäre Effekte.

In einer Weiterbildung der Erfindung ist vorgesehen, dass der Transformator einen Transformatorkern mit einem Luftspalt umfasst. Das vereinfacht die Herstellung des Transformators, weil Abweichungen der Magnetisierungsinduktivität innerhalb eines Toleranzbereichs verringert werden. Die Magnetisierungsinduktivität wird durch die Permeabilität der Luft im Luftspalt stabilisiert, wobei die absolute Magnetisierungsinduktivität im Vergleich zu Transformatorkernen ohne Spalt sinkt.

Vorteilhafterweise umfasst die Zusatzschaltung eine Induktivität, wobei eine Seite der Induktivität über eine zweite Diode an den zweiten Anschluss des Resonanzkondensators und über eine dritte Diode an den ersten Anschluss eines Speicherkondensators geschaltet ist und wobei die andere Seite der Induktivität mit dem Ausgang des Eintakt-Durchflusswandlers und mit dem zweiten Anschluss des Speicherkondensators verbunden ist. Dann wird die vom Resonanzkondensator über die Induktivität auf den Speicherkondensator übertragene Entmagnetisierungsenergie bei abfallender Spannung am Resonanzkondensator dem Ausgang des Wandlers zugeführt. Dabei entlädt der aufrechte Stromfluss. durch die Induktivität über die dritte Diode den Speicherkondensator.

Eine weitere Verbesserung des Wandlers sieht vor, dass an die Sekundärwicklung eine Klemmschaltung zur Begrenzung von Spannungsspitzen angeschaltet ist. Damit werden auch bei Sonderbetriebsfällen unzulässige Spannungen an den Leistungsschaltelementen vermieden. Ein solcher Sonderfall ist zum Beispiel bei einer höchstmöglich vorgegebenen Ausgangsspannung bei gleichzeitig höchster zulässiger Eingangsspannung gegeben. Dabei wird die primärseitige Spannungsbelastung der Leistungsschaltelemente nachgestellt und die sekundärseitige Leistungswicklung während einer Sperrphase geklemmt.

Von Vorteil ist es, wenn die Klemmschaltung zwei in Serie angeordnete Kondensatoren umfasst, wobei der erste Kondensator zur Aufladung während einer Flussphase über eine vierte Diode an die Sekundärwicklung geschaltet ist und wobei der zweiter Kondensator zur Aufladung während einer Sperrphase über eine fünfte Diode an die Sekundärwicklung geschaltet ist.

Dabei ist in einer günstigen Ausprägung vorgesehen, dass an den in Serie geschalteten Kondensatoren eine Zenerdiode in Reihe mit einem ersten Widerstand anliegt, dass eine Verbindung zwischen Zenerdiode und erstem Widerstand ein Schaltelement ansteuert, welches über einen zweiten Widerstand die beiden Anschlüsse des zweiten Kondensators verbindet.

Eine Ausprägung mit Energierückgewinnung sieht vor, dass an den in Serie geschalteten Kondensatoren ein Spannungsteiler anliegt, dessen geteilte Spannung einer Steuerung eines DC/DC-Wandler zugeführt ist und dass der DC/DC-Wandler zur Energieübertragung zwischen den zweiten Kondensator und den Ausgang des Eintakt-Durchflusswandlers geschaltet ist. Dabei wird die während eines Klemmvorgangs im zweiten Kondensator gespeicherte Energie mittels DC/DC-Wandlers an den Ausgang des Eintakt-Durchflusswandler abgegeben.

Dabei ist es günstig, wenn die Steuerung ein Schaltelement ansteuert, das über eine Hilfsinduktivität die beiden Anschlüsse des zweiten Kondensators verbindet, wobei die Hilfsinduktivität über einen Hilfskondensator und eine sechste Diode mit dem Ausgang des Eintakt-Durchflusswandlers verbunden ist. Eine taktende Ansteuerung des Schaltelements bewirkt eine Energieübertragung vom zweiten Kondensator zum Ausgang des Wandlers.

Das Verfahren zum Betreiben eines erfindungsgemäßen Eintakt-Durchflusswandlers sieht vor, dass während einer Sperrphase Entmagnetisierungsenergie aus dem Transformator in den Resonanzkondensator überschwingt und dass die im Resonanzkondensator gespeicherte Energie über die Zusatzschaltung, bestehend aus sekundärseitigen Flusswandlerelementen, an den Ausgang des Eintakt-Durchflusswandlers abgegeben wird.

In einer Ausprägung des Verfahrens wird in einer ersten Phase die Energie aus dem Resonanzkondensator über eine zweite Diode und eine Induktivität an den Ausgang des Eintakt-Durchflusswandlers und in einen Speicherkondensator abgegeben und in einer nachfolgenden Phase wird die im Speicherkondensator gespeicherte Energie über eine dritte Diode und die Induktivität an den Ausgang des Eintakt-Durchflusswandlers abgegeben. Ein solches Verfahren ist mit einfach aufgebauten sekundärseitigen Flusswanderelementen durchführbar.

In einer Weiterbildung umfasst das Verfahren das Betreiben einer Klemmschaltung, wobei während einer Flussphase ein erster Kondensator der Klemmschaltung aufgeladen wird, wobei während einer Sperrphase ein zweiter Kondensator der Klemmschaltung aufgeladen wird und wobei Energie aus dem zweiten Kondensator an den Ausgang des Eintakt-Durchflusswandlers abgegeben wird, sobald die summierte Spannung der zwei in Serie angeordneten Kondensatoren eine Referenzspannung erreicht. Auf diese Weise wird die in der Klemmschaltung gespeicherte Energie nicht in Wärme umgewandelt, sondern steht am Ausgang des Eintakt-Durchflusswandlers zur Verfügung.

Vorteilhafterweise wird der Eintakt-Durchflusswandler mit Klemmschaltung in der Weise betrieben, dass die summierte Spannung der zwei in Serie angeordneten Kondensatoren gemessen wird, dass das resultierende Messsignal einem DC-DC-Wandler zugeführt und mit einem Referenzwert verglichen wird und dass mittels DC-DC-Wandler Energie aus dem zweiten Kondensator an den Ausgang des Eintakt-Durchflusswandlers abgegeben wird, sobald das Messsignal den Referenzwert übersteigt. Die Nutzung eines DC-DC-Wandlers ermöglicht dabei eine effiziente Energieübertragung an den Ausgang des Wandlers.

Die Erfindung wird nachfolgend in beispielhafter Weise unter Bezugnahme auf die beigefügten Figuren erläutert. Es zeigen in schematischer Darstellung:

Fig. 1    Eintakt-Durchflusswandler nach dem Stand der Technik

Fig. 2    Sekundärseite eines Eintakt-Durchflusswandlers mit einem Resonanzkondensator und Energierückgewinnung

Fig. 3    Sekundärseite eines Eintakt-Durchflusswandlers mit einem Resonanzkondensator und Energierückgewinnung sowie mit einer Klemmschaltung

Fig. 4    Sekundärseite eines Eintakt-Durchflusswandlers mit einem Resonanzkondensator und einer Klemmschaltung mit Energierückgewinnung

Ein gattungsgemäßer Eintakt-Durchflusswandler weist keine Entmagnetisierungswicklung auf und ist für ein Tastverhältnis von bis zu 70% nutzbar. An eine Eingangsspannung 1, beispielsweise eine gleichgerichtete Zwischengleichspannung, ist eine vorzugsweise geteilte Primärwicklung 4, 5 über zwei Leistungsschaltelemente 2, 3 angeschaltet. Dieser Aufbau ist symmetrisch, sodass jedes Leistungsschaltelement 2 bzw. 3 einem Teil der Primärwicklung 4 bzw. 5 zugeordnet ist. Angesteuert werden die Leistungsschaltelemente 2, 3 über Treiberschaltungen 6, 7 mittels einer nicht dargestellten Steuerung.

Eine Seite der Sekundärwicklung 8 ist an einen ersten Ausgangskontakt des Eintakt-Durchflusswandlers geführt und die zweite Seite der Sekundärwicklung 8 ist über eine Sekundärdiode 9 und eine Drossel 10 an einen zweiten Ausgangskontakt des Eintakt-Durchflusswandlers geführt. Bei abgeschalteten Leistungsschaltelementen 4, 5 treibt die Drossel 10 den sekundärseitigen Strom weiter über eine Freilaufdiode 11 und den Ausgang des Eintakt-Durchflusswandlers. An den Ausgängen liegt günstigerweise ein Ausgangskondensator 12 an.

Zum Schutz der sekundärseitigen Dioden 9, 11 gegen Überspannungen ist ein Snubber vorgesehen, welcher aus einer Snubber-Diode 13, einem Snubber-Kondensator 15 und einem Snubber-Widerstand 15 besteht.

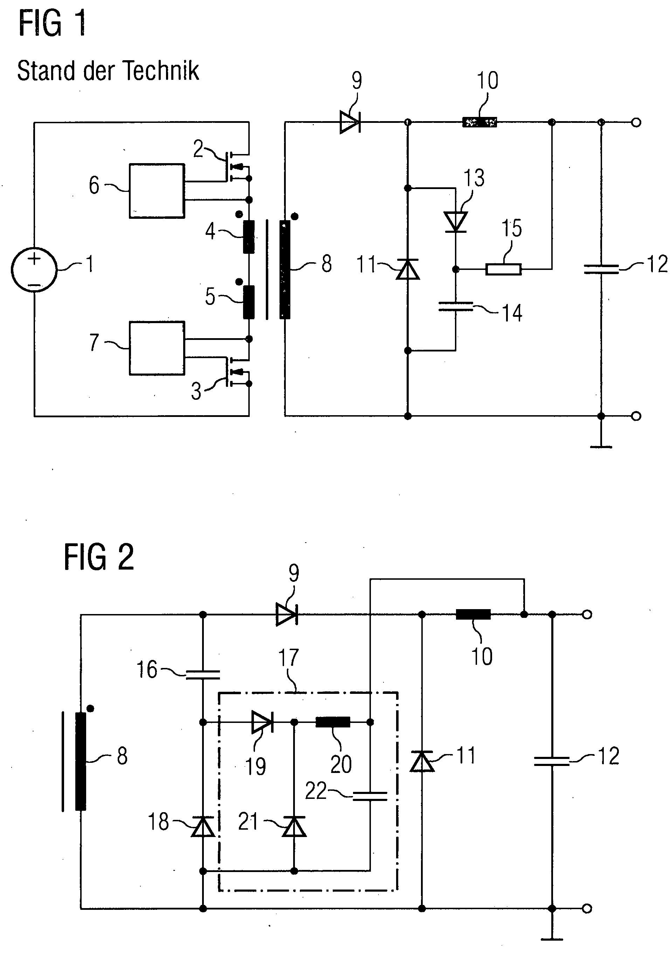

Die erfindungsgemäße Schaltung macht einen solchen Snubber überflüssig. Stattdessen ist, wie in Fig. 2 dargestellt, ein Resonanzkondensator 16 angeordnet, welcher über eine erste Diode 18 an die Sekundärwicklung 8 angeschaltet ist. Zwischen Resonanzkondensator 16 und erster Diode 18 ist eine Zusatzschaltung 17 angeordnet, mittels derer die im Resonanzkondensator 16 gespeicherte Energie an den Ausgang des Eintakt-Durchflusswandlers abgegeben wird. Zum Beispiel entspricht die Anordnung der Schaltungselemente dieser Zusatzschaltung 17 der Anordnung der sekundärseitigen Elemente 9, 10, 11, 12 des Eintakt-Durchflusswandlers. Es ist also eine Induktivität 20 mit einer Seite über eine zweite Diode 19 an den Resonanzkondensator 16 und mit der anderen Seite an einen Speicherkondensator 22 geschaltet. Über eine dritte Diode 21 ist ein Freilaufpfad der Induktivität 20 und des Speicherkondensators 22 zum Ausgang des Eintakt-Durchflusswandlers angelegt.

Günstigerweise ist der Kern des Transformators, an dem die Primärwicklung 4, 5 und die Sekundärwicklung 8 angebracht ist, mit einem Luftspalt versehen. Die absolute Magnetisierungsinduktivität $L_{mag}$ sinkt und wird durch die Permeabilität der Luft im Luftspalt stabilisiert. Infolgedessen steigt der Magnetisierungsstrom und die Entmagnetisierungsphase nach dem Abschalten der Leistungsschaltelemente 3, 4 wird verkürzt.

Die sich ergebende Resonanzspannungsüberhöhung $U_r$ nach Abschaltung der Leistungsschaltelemente 3, 4 errechnet sich mit folgender Formel:

$$U_r = I_{mag,\max} * \sqrt{\frac{L_{mag}}{C_r}} + Uz$$

$I_{mag,max}$ .. maximaler Magnetisierungsstrom
$U_z$ ...... Eingangsspannung (Zwischenkreisspannung)
Cr ...... Resonanzkapazität
$L_{mag}$ .... Magnetisierungsinduktivität des Transformators

Für die Resonanzfrequenz $f_r$ ergibt sich:

$$f_r = \frac{1}{2\pi} * \sqrt{L_{mag} * C_r}$$

Die Resonanzkapazität $C_r$ setzt sich dabei aus den vorhandenen parasitären Kapazitäten und der Kapazität des Resonanzkondensators 16 zusammen.

Ohne weitere Maßnahmen würden die Leistungsschaltelemente 3, 4 während der Einschaltphase die parasitären Kapazitäten entladen, wodurch Leistungsverluste $P_V$ entstünden:

$$P_V = \frac{Uz^2 * C_r * f_s}{2}$$

$f_s$ ...... Schaltfrequenz der Leistungsschaltelemente 3, 4

Durch die Zuschaltung des Resonanzkondensators 16 und der Zusatzschaltung 17 werden diese Leistungsverluste kompensiert. Es erfolgt eine Reduktion und Stabilisierung der Resonanzfrequenz $f_r$. Weiters wird die Beeinflussung der Resonanzfrequenz $f_r$ durch die parasitären Kapazitäten im Transformator und in den Leistungsschaltelementen 3, 4 reduziert und die Resonanzenergie während einer Flussphase mittels der Zusatzschaltung 17 an den Ausgang des Eintakt-Durchflusswandlers gespeist.

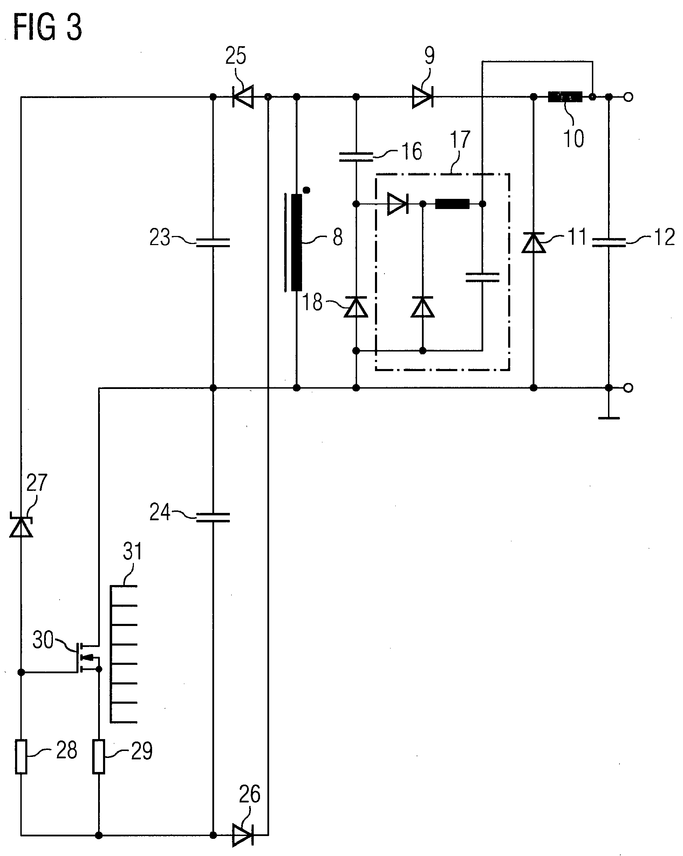

In Fig. 3 ist die Schaltung gemäß Fig. 2 um eine Klemmschaltung erweitert. Diese dient dazu, auch bei Sonderbetriebsfällen wie zum Beispiel höchster Eingangsspannung und gleichzeitig höchster eingestellter Ausgangsspannung unzulässige Spannungen an den Leistungsschaltelementen 3, 4 zu vermeiden. Die Klemmschaltung ist sekundärseitig angeordnet, weil dadurch die elektronischen Bauteile nur für die niedrigere sekundärseitige Spannung ausgelegt sein müssen. Zunächst erfolgt mittels zweier Kondensatoren 23, 24 und zweier Dioden 25, 26 eine Summierung der Spannungen, die jeweils während einer Flussphase und während einer Sperrphase an der Sekundärwicklung 8 anliegen. Dabei wird der erste Kondensator 23 während einer Flussphase und der zweite Kondensator 24 während einer Sperrphase aufgeladen.

An der summierten Spannung liegt eine Zenerdiode 27 in Reihe mit einem ersten Widerstand 28 an. Die Dimensionierung dieser Zenerdiode 27 und dieses ersten Widerstandes 28 bestimmt einen Grenzspannungswert. Sobald die an den Kondensatoren 23, 24 anliegende summierte Spannung den Grenzspannungswert erreicht, wird die Zenerdiode 27 leitend und steuert ein Schaltelement 30 an. Über dieses Schaltelement 30 und einen zweiten Widerstand 29 entlädt sich der zweite Kondensator 24, wobei die belasteten Elemente 30, 29 Wärme an einen Kühlkörper 31 abgeben.

Auf diese Weise wird die Spannungsbelastung der primärseitigen Leistungsschaltelemente 3, 4 nachgestellt und die Sekundärwicklung 8 bei Bedarf während einer Sperrphase geklemmt.

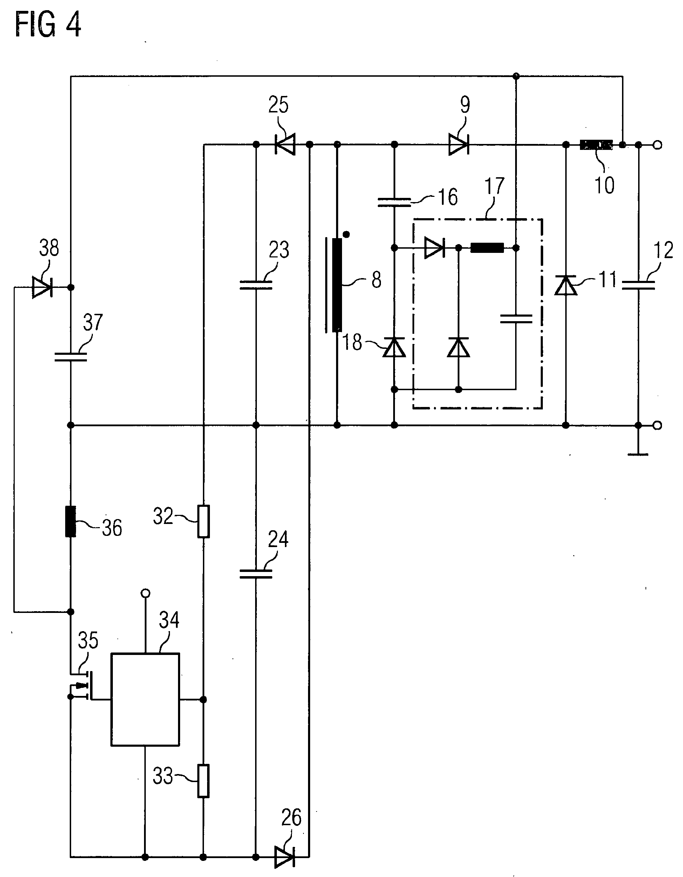

Eine Verbesserung dieser Klemmschaltung ist in Fig. 4 dargestellt. Dabei ist an die summierte Spannung ein Spannungsteiler, bestehend aus zwei in Reihe geschalteten Widerständen 32, 33, geschaltet. Die geteilte Spannung ist als Messsignal einer Steuerung 34 eines DC/DC-Wandlers zugeführt. Mittels der Steuerung 34 wird der gemessene Spannungswert laufend mit einem Referenzwert verglichen. Ein Überschreiten des Referenzwertes aktiviert den DC/DC-Wandler.

Die Elemente des DC/DC-Wandlers umfassen ein Schaltelement 35, eine Hilfsinduktivität 36, einen Hilfskondensator 37 und eine sechste Diode 38. Das Schaltelement 35 wird mittels Steuerung 34 taktend angesteuert, sodass Energie aus dem zweiten Kondensator 24 über die Hilfsinduktivität 36 in den Hilfskondensator 37 gespeist wird. Während einer Einschaltphase des Schaltelements 35 fließt Strom aus dem zweiten Kondensator 24 über das Schaltelement 35 und die Hilfsinduktivität 36 in den Hilfskondensator 37 und während einer Ausschaltphase des Schaltelements 35 fließt der weiter durch die Hilfsinduktivität 36 getriebene Strom durch die sechste Diode in den Hilfskondensator 37.

Der Hilfskondensator 37 ist dabei parallel zum Ausgang des Eintakt-Durchflusswandlers angeordnet, sodass die zurückgewonnene Energie dort entnehmbar ist.

**Patentansprüche**

1. Eintakt-Durchflusswandler mit einem Transformator, an dem eine Primärwicklung (4, 5) und eine Sekundärwicklung (8) angeordnet sind, wobei die Primärwicklung (4, 5) mittels zweier symmetrisch in Serie angeordneter Leistungsschaltelemente (2, 3) getaktet an eine Eingangsspannung (1) geschaltet ist, wobei die Sekundärwicklung (8) über sekundärseitige Flusswandlerelemente (9, 10, 11) mit einem Ausgang des Eintakt-Durchflusswandlers verbunden ist und wobei während einer Sperrphase eine Magnetisierungsenergie frei in parasitäre Kapazitäten umschwingt, wobei sekundärseitig ein Resonanzkondensator (16) angeordnet ist, dessen erster Anschluss mit einem Ende der Sekundärwicklung (8) und dessen zweiter Anschluss über eine erste Diode (18) mit dem anderen Ende der Sekundärwicklung (8) verbunden ist, **dadurch gekennzeichnet, dass** der zweite Anschluss des Resonanzkondensators (16) über eine Zusatzschaltung (17), bestehend aus weiteren sekundärseitigen Flusswandlerelementen (19, 20, 21), mit dem Ausgang des Eintakt-Durchflusswandlers verbünden ist, um die im Resonanzkondensator (16) gespeicherte Energie an den Ausgang abzugeben, wobei die Zusatzschaltung (17) eine Induktivität (20) umfasst, wobei eine Seite der Induktivität (20) über eine zweite Diode (19) an den zweiten Anschluss des Resonanzkondensators (16) und über eine dritte Diode (21) an den ersten Anschluss eines Speicherkondensators (22) geschaltet ist und wobei die andere Seite der Induktivität (20) mit dem Ausgang des Eintakt-Durchflusswandlers und mit dem zweiten Anschluss des Speicherkondensators (22) verbunden ist.

2. Eintakt-Durchflusswandler nach Anspruch 1,, **dadurch gekennzeichnet, dass** der Transformator einen Transförmatorkern mit einem Luftspalt umfasst.

3. Eintakt-Durchflusswandler nach einem der Ansprüche 1 bis 2, **dadurch gekennzeichnet, dass** an die Sekundärwicklung (8) eine Klemmschaltung zur Begrenzung von Spannungsspitzen angeschaltet ist.

4. Eintakt-Durchflusswandler nach Anspruch 3, **dadurch gekennzeichnet, dass** die Klemmschaltung zwei in Serie angeordnete Kondensatoren (23, 24) umfasst, wobei der erste Kondensator (23) zur Aufladung während einer Flussphase über eine vierte Diode (25) an die Sekundärwicklung (8) geschaltet ist und wobei der zweiter Kondensator (24) zur Aufladung während einer Sperrphase über eine fünfte Diode (26) an die Sekundärwicklung (8) geschaltet ist.

5. Eintakt-Durchflusswandler nach Anspruch 4, **dadurch gekennzeichnet, dass** an den in Serie geschalteten Kondensatoren (23, 24) eine Zenerdiode (27) in Reihe mit einem ersten Widerstand (28) anliegt, dass eine Verbindung zwischen Zenerdiode (27) und erstem Widerstand (28) ein Schaltelement (30) ansteuert, welches über einen zweiten Widerstand (29) die beiden Anschlüsse des zweiten Kondensators (24) verbindet.

6. Eintakt-Durchflusswandler nach Anspruch 4, **dadurch gekennzeichnet, dass** an den in Serie geschalteten Kondensatoren (23, 24) ein Spannungsteiler (32, 33) anliegt, dessen geteilte Spannung einer Steuerung (34) eines DC/DC-Wandler zugeführt ist und dass der DC/DC-Wandler zur Energieübertragung zwischen den zweiten Kondensator (24) und den Ausgang des Eintakt-Durchflusswandlers geschaltet ist.

7. Eintakt- Durchflusswandler nach Anspruch 6, **dadurch gekennzeichnet, dass** die Steuerung (34) ein Schaltelement (35) ansteuert, das über eine Hilfsinduktivität (36) die beiden Anschlüsse des zweiten Kondensators (24) verbindet, wobei die Hilfsinduktivität (36) über einen Hilfskondensator (37) und eine sechste Diode (38) mit dem Ausgang des Eintakt-Durchflusswandlers verbunden ist.

8. Verfahren zum Betreiben eines Eintakt-Durchflusswandlers nach einem der Ansprüche 1 bis 7, **dadurch gekennzeichnet, dass** während einer Sperrphase Entmagnetisierungsenergie aus dem Transformator in den Resonanzkondensator (16) überschwingt und dass die im Resonanzkondensator (16) gespeicherte Energie über die Zusatzschaltung (17), bestehend aus sekundärseitigen Flusswandlerelementen, an den Ausgang des Eintakt-Durchflusswandlers abgegeben wird.

9. Verfahren nach Anspruch 8, **dadurch gekennzeichnet, dass** in einer ersten Phase die Energie aus dem Resonanzkondensator (16) über eine zweite Diode (19) und eine Induktivität (20) an den Ausgang des Eintakt-Durchflusswandlers und in einen Speicherkondensator (22) abgegeben wird und dass in einer nachfolgenden Phase die im Speicherkondensator (22) gespeicherte Energie über eine dritte Diode (21) und die Induktivität (20) an den Ausgang des Eintakt-Durchflusswandlers abgegeben wird.

10. Verfahren nach Anspruch 8 oder 9, **dadurch gekennzeichnet, dass** während einer Flussphase ein erster Kondensator (23) einer Klemmschaltung aufgeladen wird, dass während einer Sperrphase ein zweiter Kondensator (24) der Klemmschaltung aufgeladen wird und dass Energie aus dem zweiten Kondensator (24) an den Ausgang des Eintakt-Durchflusswandlers abgegeben wird, sobald die summierte Spannung der zwei in Serie angeordneten Kondensatoren (23, 24) eine Referenzspannung erreicht.

11. Verfahren nach Anspruch 10, **dadurch gekennzeichnet, dass** die summierten Spannung der zwei in Serie angeordneten Kondensatoren (23, 24) gemessen wird, dass das resultierende Messsignal einem DC-DC-Wandler zugeführt und mit einem Referenzwert verglichen wird und dass mittels DC-DC-Wandler Energie aus dem zweiten Kondensator (24) an den Ausgang des Eintakt-Durchflusswandlers abgegeben wird, sobald das Messsignal den Referenzwert übersteigt.

## Claims

1. Forward converter with a transformer, on which a primary winding (4, 5) and a secondary winding (8) are arranged, wherein the primary winding (4, 5) is connected in a clocked manner to an input voltage (1) by means of two circuit breaker elements (2, 3) arranged symmetrically in series, wherein the secondary winding (8) is connected to an output of the forward converter by way of flow converter elements (9, 10, 11) at the secondary side and wherein during a blocking phase, a magnetisation energy oscillates freely in parasitic capacitances, wherein a resonance capacitor (16) is arranged at the secondary side, the first terminal of which is connected to one end of the secondary winding (8) and the second terminal of which is connected to the other end of the secondary winding (8) by way of a first diode (18), **characterised in that** the second terminal of the resonance capacitor (16) is connected to the output of the forward converter by way of an additional circuit (17) consisting of further flow converter elements (19, 20, 21) at the secondary side, in order to output the energy stored in the resonance capacitor (16) to the output, wherein the additional circuit (17) comprises an inductor (20), wherein one side of the inductor (20) is connected by way of a second diode (19) to the second terminal of the resonance capacitor (16) and by way of a third diode (21) to the first terminal of a storage capacitor (22) and wherein the other side of the inductor (20) is connected to the output of the forward converter and to the second terminal of the storage capacitor (22).

2. Forward converter according to claim 1, **characterised in that** the transformer comprises a transformer core with an air gap.

3. Forward converter according to one of claims 1 to 2, **characterised in that** a clamping circuit for limiting the voltage peaks is connected to the secondary winding (8).

4. Forward converter according to claim 3, **characterised in that** the clamping circuit comprises two capacitors (23, 24) arranged in series, wherein the first capacitor (23) for charging during a flow phase is connected to the secondary winding (8) by way of a fourth diode (25) and wherein the second capacitor (24) for charging during a blocking phase is connected to the secondary winding (8) by way of a fifth diode (26).

5. Forward converter according to claim 4, **characterised in that** a zener diode (27) is positioned in series with a first resistor (28) on the series-connected capacitors (23, 24), that a connection between the zener diode (27) and the first resistor (28) controls a switching element (30) which connects the two terminals of the second capacitor (24) by way of a second resistor (29).

6. Forward converter according to claim 4, **characterised in that** a voltage divider (32, 33) is positioned on the series-connected capacitors (23, 24), the divided voltage of which is fed to a controller (34) of a DC/DC converter and that the DC/DC converter for energy transmission is connected between the second capacitor (24) and the output of the forward converter.

7. Forward converter according to claim 6, **characterised in that** the controller (34) controls a switching element (35), which connects the two terminals of the second capacitor (24) by way of an auxiliary inductor (36), wherein the auxiliary inductor (36) is connected to the output of the forward converter by way of an auxiliary capacitor (37) and a sixth diode (38).

8. Method for operating a forward converter according to one of claims 1 to 7, **characterised in that** during a blocking phase demagnetisation energy from the transformer overshoots into the resonance capacitor (16) and that the energy stored in the resonance capacitor (16) is output to the output of the forward converter by way of the additional circuit (17) consisting of flow converter elements at the secondary side.

9. Method according to claim 8, **characterised in that** in a first phase the energy from the resonance capacitor (16) is output by way of a second diode (19) and an inductor (20) to the output of the forward converter and into a storage capacitor (22) and that in a subsequent phase the energy stored in the storage capacitor (22) is output by way of a third diode (21) and the inductor (20) to the output of the forward converter.

10. Method according to claim 8 or 9, **characterised in that** during a flow phase a first capacitor (23) of a clamping circuit is charged, that during a blocking phase a second capacitor (24) of the clamping circuit is charged and that energy from the second capacitor (24) is output to the output of the forward converter as soon as the total voltage of the two capacitors (23, 24) arranged in series reaches a reference voltage.

11. Method according to claim 10, **characterised in that** the total voltage of the two capacitors (23, 24) arranged in series is measured, that the resulting measurement signal is fed to a DC-DC converter and compared with a reference value and that energy from the second capacitor (24) is output by means of the DC-DC converter to the output of the forward converter as soon as the measurement signal exceeds the reference value.

**Revendications**

1. Convertisseur direct à simple alternance comportant un transformateur sur lequel sont disposés un enroulement primaire (4, 5) et un enroulement secondaire (8), ledit enroulement primaire (4, 5) étant connecté de manière cadencée à une tension d'entrée (1) au moyen de deux éléments interrupteurs de puissance (2, 3) disposés symétriquement en série, ledit enroulement secondaire (8) étant relié à une sortie du convertisseur direct à simple alternance via des éléments convertisseurs de flux (9, 10, 11) côté secondaire et, pendant une phase de blocage, une énergie d'aimantation passant librement en capacités parasitaires, un condensateur de résonance (16) étant disposé côté secondaire, condensateur dont la première borne est reliée à une extrémité de l'enroulement secondaire (8) et dont la deuxième borne est reliée via une première diode (18) à l'autre extrémité de l'enroulement secondaire (8), **caractérisé en ce que** la deuxième borne du condensateur de résonance (16) est reliée à la sortie du convertisseur direct à simple alternance via un circuit auxiliaire (17) constitué d'autres éléments convertisseurs de flux (19, 20, 21) côté secondaire, afin de céder l'énergie accumulée dans le condensateur de résonance (16) à la sortie, ledit circuit auxiliaire (17) comprenant une inductance (20), un côté de ladite inductance (20) étant connecté à la deuxième borne du condensateur de résonance (16) via une deuxième diode (19) et à la première borne d'un condensateur de stockage (22) via une troisième diode (21) et l'autre côté de l'inductance (20) étant relié à la sortie du convertisseur direct à simple alternance et à la deuxième borne du condensateur de stockage (22).

2. Convertisseur direct à simple alternance selon la revendication 1, **caractérisé en ce que** le transformateur comprend un noyau de transformateur avec un entrefer.

3. Convertisseur direct à simple alternance selon l'une des revendications 1 à 2, **caractérisé en ce qu'**un circuit de blocage servant à limiter les pics de tension est connecté sur l'enroulement secondaire (8).

4. Convertisseur direct à simple alternance selon la revendication 3, **caractérisé en ce que** ledit circuit de blocage comprend deux condensateurs (23, 24) disposés en série, le premier condensateur (23) étant connecté à l'enroulement secondaire (8) via une quatrième diode (25) pour être chargé pendant une phase de flux et le deuxième condensateur (24) étant connecté à l'enroulement secondaire (8) via une cinquième diode (26) pour être chargé pendant une phase de blocage.

5. Convertisseur direct à simple alternance selon la revendication 4, **caractérisé en ce qu'**une diode de Zener (27) connectée en série avec une première résistance (28) est appliquée aux condensateurs (23, 24) connectés en série, **en ce qu'**une liaison entre la diode de Zener (27) et la première résistance (28) commande un élément de commutation (30), lequel relie les deux bornes du deuxième condensateur (24) via une deuxième résistance (29).

6. Convertisseur direct à simple alternance selon la revendication 4, **caractérisé en ce qu'**un diviseur de tension (32, 33) est appliqué aux condensateurs (23, 24) connectés en série, diviseur de tension dont la tension divisée est amenée à une commande (34) d'un convertisseur CC-CC, et **en ce que** ledit convertisseur CC-CC est connecté entre le deuxième condensateur (24) et la sortie du convertisseur direct à simple alternance pour la transmission d'énergie.

7. Convertisseur direct à simple alternance selon la revendication 6, **caractérisé en ce que** ladite commande (34) commande un élément de commutation (35) qui relie les deux bornes du deuxième condensateur (24) via une inductance auxiliaire (36), ladite inductance auxiliaire (36) étant reliée à la sortie du convertisseur direct à simple alternance via un condensateur auxiliaire (37) et une sixième diode (38).

8. Procédé pour faire fonctionner un convertisseur direct à simple alternance selon l'une des revendications 1 à 7, **caractérisé en ce que**, pendant une phase de blocage, de l'énergie de désaimantation passe du transformateur dans le condensateur de résonance (16), et **en ce que** l'énergie accumulée dans le condensateur de résonance (16) est cédée à la sortie du convertisseur direct à simple alternance via le circuit auxiliaire (17) constitué d'éléments convertisseurs de flux côté secondaire.

9. Procédé selon la revendication 8, **caractérisé en ce que**, dans une première phase, l'énergie issue du condensateur de résonance (16) est cédée à la sortie du convertisseur direct à simple alternance et à un condensateur de stockage (22) via une deuxième diode (19) et une inductance (20), et **en ce que**, dans une phase suivante, l'énergie accumulée dans le condensateur de stockage (22) est cédée à la sortie du convertisseur direct à simple alternance via une troisième diode (21) et l'inductance (20).

10. Procédé selon la revendication 8 ou 9, **caractérisé en ce que**, pendant une phase de flux, un premier condensateur (23) d'un circuit de blocage est chargé, **en ce que**, pendant une phase de blocage, un deuxième condensateur (24) du circuit de blocage est chargé et **en ce que** l'énergie issue du deuxième condensateur (24) est cédée à la sortie du convertisseur direct à simple alternance dès lors que la tension cumulée des deux condensateurs (23, 24) disposés en série atteint une tension de référence.

11. Procédé selon la revendication 10, **caractérisé en ce que** la tension cumulée des deux condensateurs (23, 24) disposés en série est mesurée, **en ce que** le signal de mesure résultant est amené à un convertisseur CC-CC et comparé à une valeur de référence, et **en ce que** l'énergie issue du deuxième condensateur (24) est cédée au moyen dudit convertisseur CC-CC à la sortie du convertisseur direct à simple alternance dès lors que le signal de mesure dépasse la tension de référence.

# FIG 1

Stand der Technik

# FIG 2

# FIG 3

# FIG 4

**IN DER BESCHREIBUNG AUFGEFÜHRTE DOKUMENTE**

**In der Beschreibung aufgeführte Patentdokumente**

- EP 1202440 A1
- US 5278748 A